# EUROPEAN PATENT APPLICATION

(11) **EP 4 645 520 A1**
(43) Date of publication of application: **05.11.2025**
(21) Application number: 24771173.2
(22) Date of filing: 12.03.2024
(51) Int. Cl.: H01M 10/48, H01M 10/42, H01M 10/04, H01M 10/058, H01M 50/449, H01M 10/052

(54) **SECONDARY BATTERY FOR TESTING INTERNAL SHORT CIRCUIT AND MANUFACTURING METHOD AND TESTING METHOD THEREFOR**

(30) Priority: 14.03.2023 KR 20230033530
(71) Applicant: LG Energy Solution, Ltd., Seoul 07335 (KR)
(72) Inventor: AHN, Seo Ryoung, Daejeon 34122 (KR); YOON, Yeong Deok, Daejeon 34122 (KR); KIM, Young Rae, Daejeon 34122 (KR)
(74) Representative: Goddar, Heinz J.
(86) International application number: PCT/KR2024/003185
(87) International publication number: WO 2024/191174

(57) **Abstract**

The present invention relates to a secondary battery for an internal short-circuit test, and the secondary battery for the internal short-circuit test includes: an electrode assembly; and a pouch configured to accommodate the electrode assembly, wherein the electrode assembly includes: a main first electrode constituted by a main first current collector and a main first coating layer applied to a remaining surface except for a first non-coating surface that is partitioned on the main first current collector; a second electrode constituted by a second current collector and a second coating layer applied to a surface of the second current collector; a main separator disposed between the main first electrode and the second electrode and having a through-hole at a position corresponding to the first non-coating surface; an auxiliary separator detachably attached to the main separator to block or open the through-hole; and an auxiliary first electrode detachably attached to the first non-coating surface and configured to connect the first non-coating surface of the main first current collector to the second electrode so that internal short circuit between the first non-coating surface and the second electrode occurs through the opened through-hole when being detached.

## Description

### TECHNICAL FIELD

### CROSS-REFERENCE TO RELATED APPLICATION

The present application claims the benefit of the priority of Korean Patent Application No. 10-2023-0033530, filed on March 14, 2023, which is hereby incorporated by reference in its entirety.

### TECHNICAL FIELD

The present invention relates to a secondary battery for an internal short-circuit test capable of testing internal short-circuiting between a positive electrode, lithium precipitate, and a negative electrode, or between a current collector provided in the positive electrode and a negative electrode, and a manufacturing method and testing method thereof.

### BACKGROUND ART

In general, secondary batteries refer to chargeable and dischargeable, unlike primary batteries that are not chargeable. The secondary batteries are being widely used for mobile phones, notebook computers, and camcorders, electric vehicles, and the like.

The secondary batteries are classified into a can type secondary battery, in which an electrode assembly is embedded in a metal can, and a pouch type secondary battery in which an electrode assembly is embedded in a pouch. The can-type secondary battery has a structure including an electrode assembly, an electrolyte, a can accommodating the electrode assembly and the electrolyte, and a cap assembly mounted in an opening of the can. In addition, the pouch-type secondary battery has a structure including an electrode assembly, an electrolyte, and a pouch accommodating the electrode assembly and the electrolyte.

Here, the secondary battery undergoes an internal short-circuit test to improve safety. That is, the internal short circuit of the secondary battery may be broadly divided into two types. The first is an internal short circuit between a positive electrode and a negative electrode, and the second is an internal short circuit between a positive electrode, a lithium precipitate, and a negative electrode.

The first internal short circuit is more dangerous than the second internal short circuit because a potential difference between contact materials is larger. In addition, in the second internal short circuit, when a current collector of the positive electrode and the negative electrode that is in a charged state are short-circuited, if there is no coating layer of the positive electrode at a position facing the negative electrode, the negative electrode is not fully charged, making it difficult to smoothly perform the test. In addition, in the second internal short circuit, even if there is short circuit between the current collector of the positive electrode and the lithium precipitate generated in the charged negative electrode, if there is no positive electrode coating layer at a position facing the negative electrode, the lithium precipitate is not generated on an entire surface, but partially generated, and thus, it is difficult to perform the test in a desired direction.

Thus, in order to test the internal short circuit of the secondary battery in the desired direction, a secondary battery for the internal short-circuit test is needed.

### DISCLOSURE OF THE INVENTION

### TECHNICAL PROBLEM

An object of the present invention is to provide a secondary battery for an internal short-circuit test capable of smoothly and accurately testing internal short-circuiting between a positive electrode, lithium precipitate, and a negative electrode, or between a current collector provided in the positive electrode and a negative electrode, and a manufacturing method and testing method thereof.

### TECHNICAL SOLUTION

A secondary battery for an internal short-circuit test includes: an electrode assembly; and a pouch configured to accommodate the electrode assembly, wherein the electrode assembly includes: a main first electrode constituted by a main first current collector and a main first coating layer applied to a remaining surface except for a first non-coating surface that is partitioned on the main first current collector; a second electrode constituted by a second current collector and a second coating layer applied to a surface of the second current collector; a main separator disposed between the main first electrode and the second electrode and having a through-hole at a position corresponding to the first non-coating surface; an auxiliary separator detachably attached to the main separator to block or open the through-hole; and an auxiliary first electrode detachably attached to the first non-coating surface and configured to connect the first non-coating surface of the main first current collector to the second electrode so that internal short circuit between the first non-coating surface and the second electrode occurs through the opened through-hole when being detached. Thus, internal short circuit between the first electrode and the second electrode may be tested in a desired direction.

The auxiliary first electrode may include: an auxiliary first current collector having an attachment surface detachably attached to the first non-coating surface; and an auxiliary first coating layer applied on the attachment surface. Thus, the auxiliary first electrode may be stably detachably attached to the first non-coating surface.

The first non-coating surface may be disposed on an edge of the main first current collector. Thus, the auxiliary first electrode may be easily attached or detached from the first non-coating surface without damaging the main first coating layer.

The auxiliary first current collector may further include a second non-coating surface disposed outside the main first electrode when the attachment surface is attached to the first non-coating surface and configured to separate the auxiliary first current collector from the first non-coating surface. Thus, the auxiliary first electrode attached to the first non-coating surface may be easily removed.

The auxiliary separator may include: a separation surface detachably attached to the main separator while covering the through-hole; and a handle surface disposed outside the main separator when the separation surface is attached to the main separator and configured to separate the auxiliary separator from the main separator. Thus, the auxiliary separator attached to the main separator may be easily removed.

The auxiliary first electrode may have the same thickness as the main first coating layer. Thus, a stepped portion between the auxiliary first electrode and the main first coating layer may be prevented from occurring.

The second coating layer may include: a first coating surface applied to a surface of the second current collector corresponding to the through-hole; and a second coating surface applied to a surface of the second current collector on which the first coating surface is not applied, wherein the first coating surface may have a thickness less than that of the second coating surface. Thus, during charging and discharging, lithium precipitates may be smoothly generated on the first coating surface, and as a result, the internal short circuit between the main first electrode, the lithium precipitates, and the second electrode may be tested.

The main first electrode and the auxiliary first electrode may have the same polarity.

Each of the main first electrode and the auxiliary first electrode may be a positive electrode.

The second electrode may be a negative electrode.

The auxiliary first electrode may be detachably attached to the first non-coating surface through an adhesive tape. Thus, the auxiliary first electrode may be stably detachably attached to the first non-coating surface.

The auxiliary separator and the main separator may be detachably attached to each other by thermal fusion. Thus, the main separator and the auxiliary separator may be stably attached, and adhesion between the main separator and the auxiliary separator may be weakened by electrolyte impregnation to allow the main separator and the auxiliary separator to be easily separated from each other.

A method for manufacturing a secondary battery for an internal short-circuit test includes: a process (a) of preparing a main first current collector, on which a first non-coating surface is partitioned, to apply a main first coating layer on a surface of the main first current collector and remove the main first coating layer applied on the first non-coating surface, thereby manufacturing a main first electrode; a process (b) of applying a second coating layer on a surface of the second current collector to manufacture a second electrode; a process (c) of cutting a portion of a surface corresponding to the first non-coating surface when disposed between the main first electrode and the second electrode to manufacture a main separator having a through-hole; a process (d) of manufacturing an auxiliary separator that blocks or open the through-hole to detachably attach the auxiliary separator to the main separator while covering the through-hole; and a process (e) of manufacturing an auxiliary first electrode that connects or disconnects the main first current collector to or from the second electrode so that internal short circuit between the main first current collector and the second electrode occurs through the through-hole to detachably attach the auxiliary first electrode to the first non-coating surface. A finished secondary battery for the internal short-circuit test may be easily manufactured through the above-described method.

In the process (a), the auxiliary first electrode may be constituted by an auxiliary first current collector having an attachment surface detachably attached to the first non-coating surface and an auxiliary first coating layer applied on an outer surface of the attachment surface.

In the process (a), the first non-coating surface may be partitioned on an edge of the main first current collector, and in the process (e), the auxiliary first current collector may include a second non-coating surface disposed outside the main first electrode when the attachment surface is attached to the first non-coating surface and configured to separate the auxiliary first current collector from the first non-coating surface.

The process (b) may further include a process of cutting a surface of the second coating layer corresponding to the through-hole when the main separator is disposed between the main first electrode and the second electrode after applying the second coating layer, wherein the second coating layer may include a cut first coating surface and a second coating surface that is not cut, wherein the first coating surface has a thickness less than that of the second coating surface.

The method may further include, after the process (e),; a process (f) of disposing the main separator, to which the auxiliary separator is attached, between the main first electrode, to which the auxiliary first electrode is attached, and the second electrode to manufacture an electrode assembly; and a process (g) of accommodating the electrode assembly in a pouch to seal the pouch, thereby manufacturing a secondary battery for an internal short-circuit test.

The main first electrode and the auxiliary first electrode may have the same polarity.

A method for testing a secondary battery for an internal short-circuit test includes: a process (A) of applying a voltage to the secondary battery for the internal short-circuit test provided as claimed as claim 1 to perform charging/discharging; a process (B) of cutting a pouch of the secondary battery for the internal short-circuit test; a process (C) of removing an auxiliary first electrode attached to a main first electrode of an electrode assembly through a cutoff part of the pouch; a process (D) of removing an auxiliary separator attached to a main separator of the electrode assembly through a cutoff part of the pouch to open a through-hole of the main separator; and a process (E) of compressing the secondary battery for the internal short-circuit test to cause internal short circuit by allowing a first non-coating surface of the main first current collector and a second electrode to be in contact with each other through the through-hole. Thus, internal short circuit between the first electrode and the second electrode may be tested in a desired direction.

In the process (A), a second coating layer of the second electrode may have a first coating surface and a second coating surface having a thickness greater than that of the first coating surface, wherein, during charging and discharging, lithium precipitates may be generated on the first coating surface corresponding to the auxiliary first electrode. Thus, the internal short circuit between the first electrode, the lithium precipitates, and the second electrode may be tested in a desired direction.

### ADVANTAGEOUS EFFECTS

The secondary battery for the internal short-circuit test of the present invention may perform the short-circuit test between the main first electrode and the second electrode or between the current collector provided in the main first electrode and the second electrode in the desired direction.

### BRIEF DESCRIPTION OF THE DRAWINGS

FIG. 1 is a perspective view illustrating a state in which a secondary battery for an internal short-circuit test is assembled according to a first embodiment of the present invention.
FIG. 2 is an exploded perspective view of an electrode assembly of FIG. 1.
FIG. 3 is a cross-sectional view taken along line A-A of FIG. 2.
FIG. 4 is a cross-sectional view taken along line B-B of FIG. 2.
FIG. 5 is a cross-sectional view taken along line C-C of FIG. 2.
FIG. 6 is a cross-sectional view of the electrode assembly of FIG. 1.
FIG. 7 is a cross-sectional view of an electrode assembly from which an auxiliary first electrode and an auxiliary separator are removed in FIG. 6.
FIG. 8 is a cross-sectional view of an electrode assembly that is in a compressed state in FIG. 7.
FIG. 9 is a flowchart illustrating a method for manufacturing a secondary battery for an internal short-circuit test according to the first embodiment of the present invention.
FIG. 10 is a perspective view illustrating a process of manufacturing (a) a main first electrode.
FIG. 11 is a perspective view illustrating (b) a process of manufacturing a second electrode.
FIG. 12 is a perspective view illustrating (c) a process of manufacturing a main separator.
FIG. 13 is a perspective view illustrating (d) a process of attaching an auxiliary separator to the main separator.
FIG. 14 is a perspective view illustrating (e) a process of attaching an auxiliary first electrode to the main first electrode.
FIG. 15 is a flowchart illustrating a method for testing a secondary battery for an internal short-circuit test according to the first embodiment of the present invention.
FIG. 16 is a plan view illustrating a charging/discharging process.
FIG. 17 is a plan view illustrating a pouch cutting process.
FIG. 18 is a cross-sectional view illustrating a process of removing the auxiliary separator and the auxiliary first electrode.
FIG. 19 is a cross-sectional view illustrating a process of compressing a secondary battery for an internal short-circuit test.
FIG. 20 is an exploded perspective view of an electrode assembly according to a second embodiment of the present invention.
FIG. 21 is a cross-sectional view of the electrode assembly of FIG. 20.
FIG. 22 is a cross-sectional view of an electrode assembly from which an auxiliary first electrode and an auxiliary separator are removed in FIG. 21.
FIG. 23 is a cross-sectional view of an electrode assembly that is in a compressed state in FIG. 22.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery for internal short circuit test according to first embodiment of the present invention]

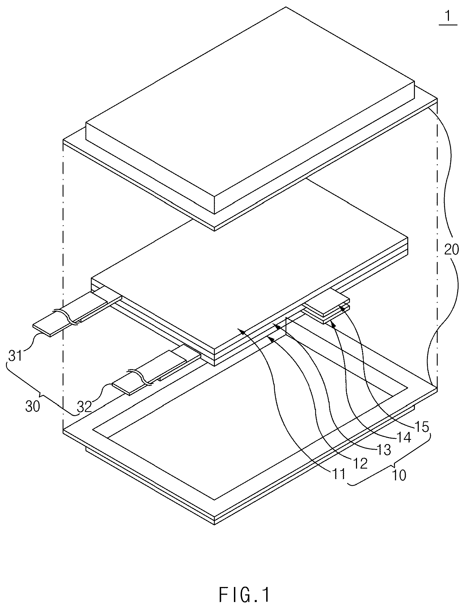

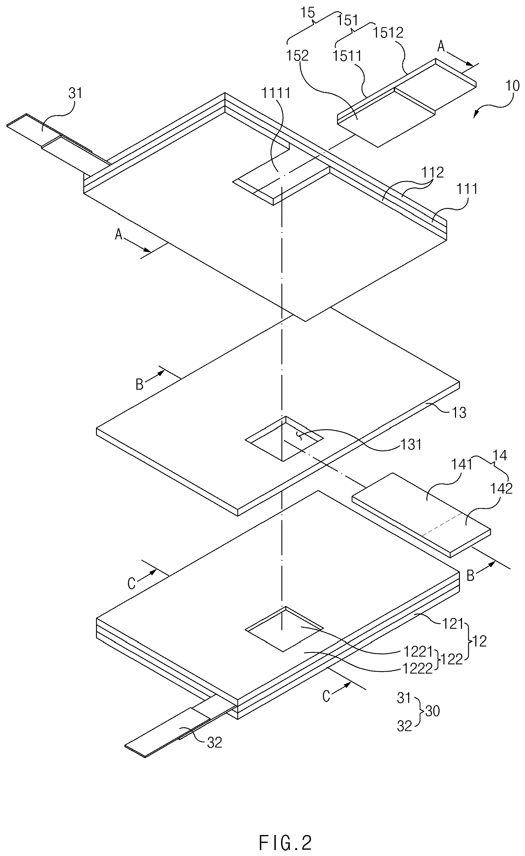

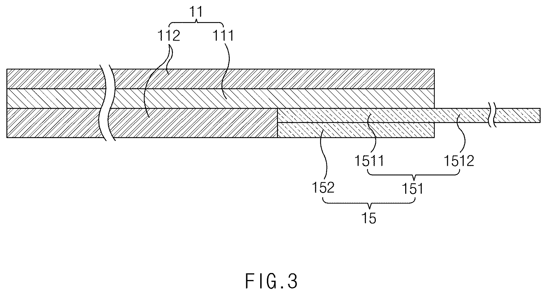

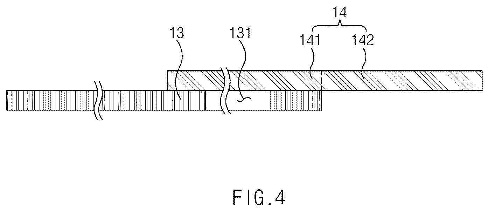

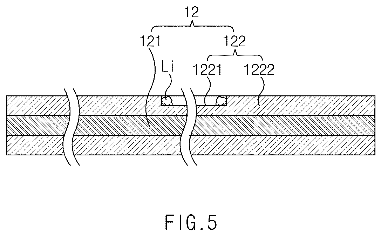

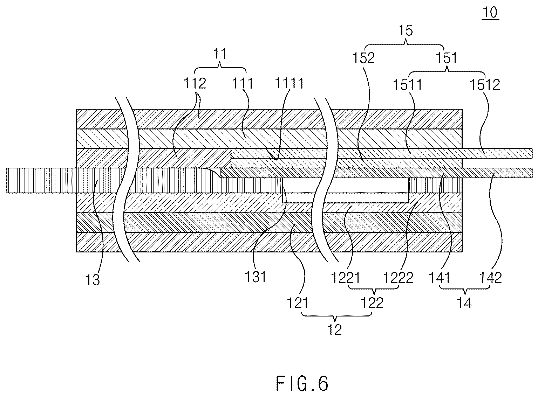

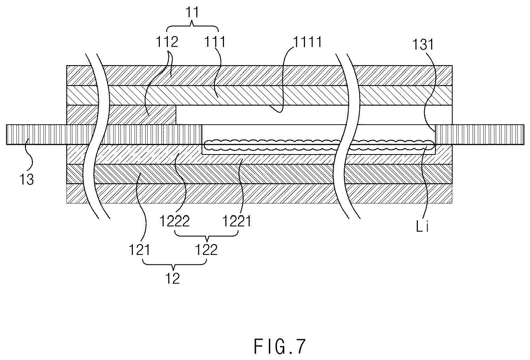

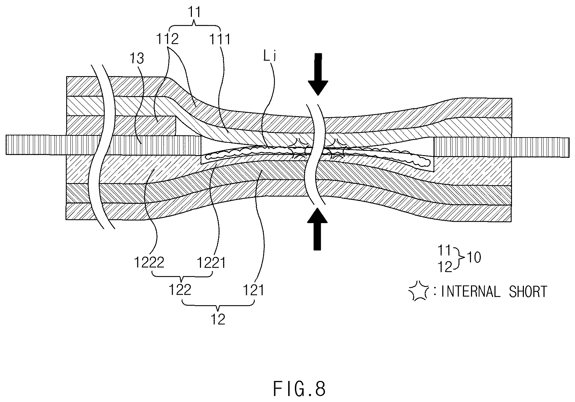

FIG. 1 is a perspective view illustrating a state in which a secondary battery for an internal short-circuit test is assembled according to a first embodiment of the present invention, FIG. 2 is an exploded perspective view of an electrode assembly of FIG. 1, FIG. 3 is a cross-sectional view taken along line A-A of FIG. 2, FIG. 4 is a cross-sectional view taken along line B-B of FIG. 2, FIG. 5 is a cross-sectional view taken along line C-C of FIG. 2, FIG. 6 is a cross-sectional view of the electrode assembly of FIG. 1, FIG. 7 is a cross-sectional view of an electrode assembly from which an auxiliary first electrode and an auxiliary separator are removed in FIG. 6, and FIG. 8 is a cross-sectional view of an electrode assembly that is in a compressed state in FIG. 7.

The secondary battery for the internal short-circuit test according to the first embodiment of the present invention is for testing internal short circuit between a positive electrode, lithium precipitate (Li), and a negative electrode.

That is, as illustrated in FIG. 1, the secondary battery 1 for the internal short-circuit test according to the first embodiment of the present invention includes an electrode assembly 10, a pouch 20 accommodating the electrode assembly 10, and an electrode lead 30 which is coupled to the assembly 10 and of which a front end extends out of the pouch 20.

### Electrode assembly

As illustrated in FIG. 2, the electrode assembly 10 includes a main first electrode 11, a second electrode 12, a main separator 13, an auxiliary separator 14, and an auxiliary first electrode 15. Here, the auxiliary separator 14 is attached to the main separator 13, and the auxiliary first electrode 15 is attached to the main first electrode 11.

The main first electrode 11 is a positive electrode, and the second electrode 12 is a negative electrode. In addition, the auxiliary first electrode 15 has the same polarity as the main first electrode 11. That is, the auxiliary first electrode 15 is a positive electrode.

As illustrated in FIG. 3, the main first electrode 11 includes a main first current collector 111 and a main first coating layer 112 applied on a remaining surface except for a first non-coating surface 1111 partitioned on the main first current collector 111. That is, the main first electrode 11 is constituted by the main first coating layer 112 coated with a first electrode active material and the first non-coating surface 1111 on which the first electrode active material is not applied. In addition, an electrode tab connected to an electrode lead 30 is disposed on the main first current collector 111.

In a method for manufacturing the main first electrode 11, the main first coating layer 112 is applied on both surfaces of the main first current collector 111. Next, the main first coating layer 112 applied on the first non-coating surface 1111 partitioned on one side of the main first current collector 111 is removed. Then, the main first electrode 11 constituted by the first non-coating surface 1111 and the main first coating layer 112 may be manufactured.

The main first electrode 11 may be a positive electrode. Thus, the main first coating layer 112 may be a positive electrode coating layer made of a positive electrode active material.

The main first current collector 111 may be prepared as a metal plate. Preferably, the first main current collector 111 may be made of aluminum (Al).

Referring to FIG. 2, the first non-coating surface 1111 may be disposed on any portion of an edge of the main first current collector 111. Preferably, the first non-coating surface 1111 may be disposed on an edge of the main first current collector 111 without an electrode tab. Thus, the auxiliary first electrode 15 may be attached to or removed from the first non-coating surface 1111 without damaging the main first coating layer 112.

As illustrated in FIG. 5, the second electrode 12 includes a second current collector 121 and a second coating layer 122 applied on a surface of the second current collector 121. That is, the second electrode 12 is manufactured by applying the second coating layer 122 on a surface of the second current collector 121. In addition, an electrode tab to be connected to the electrode lead 30 is disposed on the second current collector 121.

Here, the second electrode 12 may be a negative electrode. In addition, the second current collector 121 is made of a metal plate, and preferably, the second current collector 121 is made of a copper material.

The second electrode 12 has a structure that allows lithium precipitates (Li) to be generated on a surface of the second coating layer 122 during charging and discharging.

That is, the second coating layer 122 includes a first coating surface 1221 applied on a surface of the second current collector 121 corresponding to a through-hole 131 of the main separator 13, and a second coating surface 1222 applied on a surface of the second current collector 121 on which the first coating surface 1221 is not applied. Here, the first coating surface 1221 has a thickness less than that of the second coating surface 1222. Thus, during the charging and discharging process, the lithium precipitates (Li) are generated on the surface of the second coating layer 122. Here, a large amount of lithium precipitates are generated on the first coating surface 1221 on which a mutual reaction between the main first coating layer 112 and the first coating surface 1221 of the second coating layer 122 does not occur smoothly to grow dendrites.

The first coating surface 1221 may have a thickness so that an NP ratio of the thickness of the second coating surface 1222 is 100 or less. In other words, the thickness of the first coating surface 1221 may be 5% to 80% of the thickness of the second coating surface 1222, and is preferably 40% to 75% of the thickness of the second coating surface 1222. In particular, the first coating surface 1221 may be formed by cutting a portion of a surface of the second coating surface 1222.

As illustrated in FIG. 4, the main separator 13 is provided to prevent the main first electrode 11 and the second electrode 12 from being in contact with each other. That is, the main separator 13 is disposed between the main first electrode 11 and the second electrode 12.

In particular, the main separator 13 has a through-hole 131 defined at a position corresponding to the first non-coating surface 1111, and the first non-coating surface 1111 and the second non-coating surface are in contact with each other through the through-hole 131 to cause internal short circuit. The through-hole 131 is defined within a set distance from an edge of the main separator 13 to reinforce strength of the main separator 13.

Referring to FIG. 4, the auxiliary separator 14 is provided to block the through-hole 131 defined in the main separator 13. That is, the auxiliary separator 14 has a size large enough to cover the through-hole 131 and is detachably attached to the main separator 13 while covering the through-hole 131. Thus, the auxiliary separator 14 may block or open the through-hole 131.

Here, adhesive force between the main separator 13 and the auxiliary separator 14 is weaker than that between the main separator 13 and the first electrode. Thus, when the auxiliary separator 14 is removed from the main separator 13, the main separator 13 and the first electrode may be prevented from being separated from each other.

The auxiliary separator 14 may be made of the same material as the main separator 13. However, the auxiliary separator 14 has a thinner thickness than that of the main separator 13. Referring to FIG. 2, since the auxiliary separator 14 is disposed on a top surface of the main separator 13, a stepped portion may occur between the main separator 13 and the main first electrode 11. Thus, the thickness of the auxiliary separator 14 may be minimized to minimize the stepped portion between the main separator 13 and the main first electrode 11.

The auxiliary separator 14 has a structure that is capable of being easily removed from the main separator 13. That is, the auxiliary separator 14 includes a separation surface 141, which is detachably attached to the main separator 13 while covering the through-hole 131, and a handle surface 142 disposed outside the main separator 13 when the separation surface 141 is attached to the main separator 13 and configured to separate the auxiliary separator 14 from the main separator 13. Thus, the separation surface 141 attached to the main separator 13 may be easily removed by pulling the handle surface 142 exposed outside the main separator 13.

A length of the handle surface exposed outside the main separator 13 may be set to 5 mm to 50 mm, preferably 10 mm to 20 mm.

The auxiliary separator 14 and the main separator 13 may be bonded to each other by heat fusion. That is, the auxiliary separator 14 and the main separator 13 may be bonded to each other using heat and a pressure. In addition, when the auxiliary separator 14 and the main separator 13 are impregnated with an electrolyte, bonding force between the auxiliary separator 14 and the main separator 13 is weakened to be easily separated from each other.

In another embodiment, the auxiliary separator 14 may be detachably attached to the main separator 13 through an adhesive. Thus, stable adhesion between the auxiliary separator 14 and the main separator 13 may be maintained.

The auxiliary first electrode 15 is configured to charge the surface of the second electrode 12 facing the first non-coating surface 1111 to test the internal short circuit between the first non-coating surface 1111 and the second electrode 12.

That is, the auxiliary first electrode 15 has a structure that is detachably attached to the first non-coating surface 1111 and connects the first non-coating surface 1111 of the main first current collector 111 to the second electrode 12 so that the internal short circuit occurs between the first non-coating surface 1111 of the main first current collector 111 and the second electrode 12 through the through-hole 131.

For example, the auxiliary first electrode 15 includes an auxiliary first current collector 151 having an attachment surface 1511 detachably attached to the first non-coating surface 1111, and an auxiliary first coating layer 152 applied on the attachment surface 1511.

Here, the attachment surface 1511 has the same area as the first non-coating surface 1111. Thus, an occurrence of a gap between the attachment surface 1511 and the first coating layer may be prevented. The attachment surface 1511 may have a size per unit area, which is greater by 1 mm to 2 mm than that of the first non-coating surface 1111, and thus, the occurrence of the gap between the attachment surface 1511 and the first coating layer may be significantly prevented.

The auxiliary first electrode 15 may have the same polarity as the main first electrode 11. That is, the auxiliary first electrode 15 may be provided as a positive electrode, and thus, the auxiliary first coating layer 152 may be a positive electrode coating layer made of a positive electrode active material.

The adhesive force between the auxiliary first electrode 15 and the first non-coating surface 1111 is less than that between the main first electrode 11 and the main separator 13. Thus, when the auxiliary first electrode 15 is removed from the first non-coating surface 1111, the main first electrode 11 and the main separator 13 may be prevented from being separated from each other.

The auxiliary first electrode 15 may be detachably attached to the first non-coating surface 1111 through an adhesive tape. Thus, the auxiliary first electrode 15 and the first non-coating surface 1111 may be stably attached to each other, and when impregnated with the electrolyte, the adhesive force of the adhesive tape is weakened to easily separate the auxiliary first electrode 15 and the first non-coating surface 1111 from each other.

In another embodiment, the auxiliary first electrode 15 may be detachably attached to the first non-coating surface 1111 through the adhesive, and thus, the stable adhesion between the auxiliary first electrode 15 and the first non-coating surface 1111 may be maintained.

In addition, the auxiliary first electrode and the first non-coating surface may be attached through heat and a pressure.

The auxiliary first current collector 151 may further include a second non-coating surface 1512 that is disposed outside the main first electrode 11 when the attachment surface 1511 is attached to the first non-coating surface 1111 and configured to separate the auxiliary first current collector 151 from the first non-coating surface 1111. That is, the second non-coating surface 1512 is provided as a surface on which the auxiliary first coating layer 152 is not applied. Thus, the first auxiliary electrode 15 may be easily removed from the first non-coating surface 1111 using the second non-coating surface 1512.

The auxiliary first electrode 15 may have the same thickness as the first coating layer. Thus, a stepped portion between the auxiliary first electrode 15 and the main first electrode 11 may be prevented from occurring.

The electrode assembly 10 having the above-described structure has a structure in which the main first electrode 11, to which the auxiliary first electrode 15 is attached, and the second electrode 12 are alternately disposed with the main separator 13, to which the auxiliary separator 14 is attached, therebetween. Here, in the electrode assembly 10, when the auxiliary separator 14 attached to the main separator 13 is removed, and the auxiliary first electrode 15 attached to the main first electrode 11 is removed, the first non-coating surface 1111 of the main first electrode 11, the lithium precipitates generated on the second electrode 12 during the charging and discharging, and the second electrode 12 may be in contact with each other, and thus, internal short circuit between the main first electrode 11, the lithium precipitates, and the second electrode 12 may occur.

### Pouch

The pouch 20 is configured to accommodate the electrode assembly 10 and the electrolyte. That is, the pouch 20 includes an upper pouch and a lower pouch, which accommodate the electrode assembly 10 and the electrolyte.

### Electrode lead

The electrode lead 30 is coupled to each of electrode tabs disposed on the main first electrode 11 and the second electrode 12 of the electrode assembly 10 and has a structure of which a front end is drawn out of the pouch 20. That is, the electrode lead 30 includes a first electrode lead 31 coupled to the electrode tab of the main first electrode 11 and a second electrode lead 32 coupled to the electrode tab of the second electrode 12.

Therefore, the secondary battery 1 for the internal short-circuit test according to the first embodiment of the present invention may test the internal short circuit between the main first electrode 11, the lithium precipitates, and the second electrode 12.

Hereinafter, a method for manufacturing a secondary battery for internal short-circuit test according to the first embodiment of the present invention will be described.

### [Method for manufacturing secondary battery for internal short-circuit test according to first embodiment of the present invention]

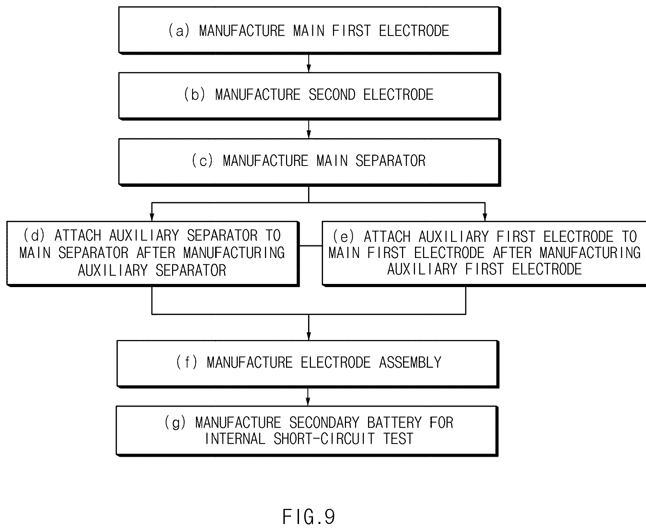

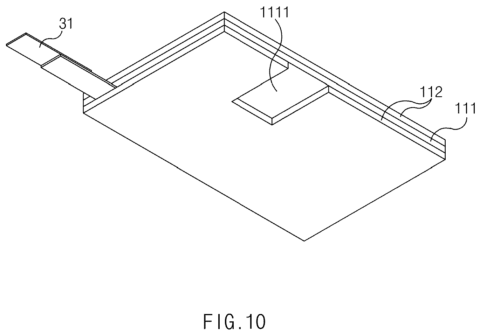

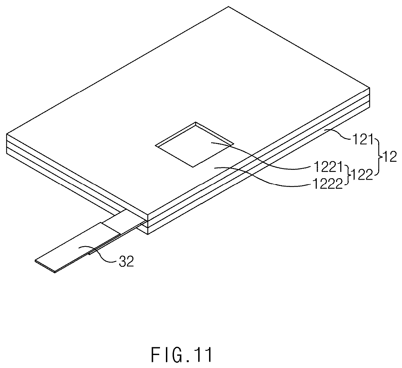

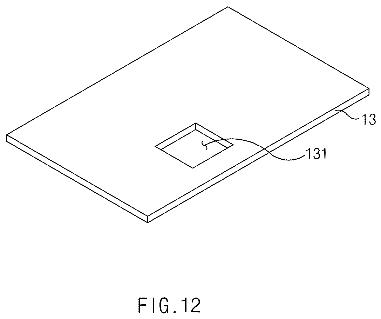

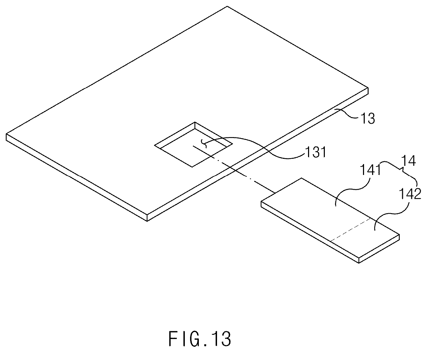

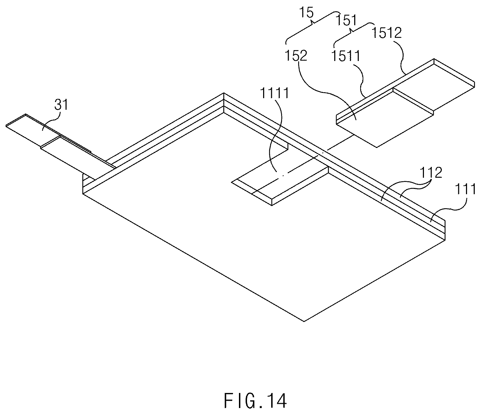

FIG. 9 is a flowchart illustrating a method for manufacturing a secondary battery for an internal short-circuit test according to the first embodiment of the present invention, (a) of FIG. 10 is a perspective view illustrating a process of manufacturing a main first electrode, (b) of FIG. 11 is a perspective view illustrating a process of manufacturing a second electrode, (c) of FIG. 12 is a perspective view illustrating a process of manufacturing a main separator, (d) of FIG. 13 is a perspective view illustrating a process of attaching an auxiliary separator to the main separator, and (e) of FIG. 14 is a perspective view illustrating a process of attaching an auxiliary first electrode to the main first electrode.

As illustrated in FIG. 9, a method for manufacturing a secondary battery for internal short-circuit test according to the first embodiment of the present invention includes a process (a) of manufacturing a first main electrode 11, a process (b) of manufacturing a second electrode, a process (c) of manufacturing a main separator, a process (d) of manufacturing an auxiliary separator to be attached to the main separator, a process (e) of manufacturing an auxiliary first electrode to be attached to the main first electrode 11, a process (f) of manufacturing an electrode assembly, and a process (g) of manufacturing a secondary battery for the internal short-circuit test. The process (c) of manufacturing the main separator, the process (d) of manufacturing the auxiliary separator to be attached to the main separator may be performed at the same time, and the process (d) of manufacturing the auxiliary separator to be attached to the main separator may be performed before the process (c) of manufacturing the main separator.

### Process (a) of manufacturing main first electrode

As illustrated in FIG. 10, in the process (a) of manufacturing the main first electrode, a main first current collector 111 on which a first non-coating surface 1111 is partitioned is prepared. Next, a main first coating layer 112 is applied on a surface of the main first current collector 111. Next, the main first coating layer 112 applied on the first non-coating surface 1111 is removed. Then, the main first electrode 11 may be manufactured.

The main first coating layer 112 applied on the first non-coating surface 1111 may be cut using a cutting device (not shown) or may be removed in a manner in which the main first coating layer 112 is cleaned and dried (to vaporize NMP) by using N-Methyl-2-pyrrolidone (NMP: first electrode material binder solvent).

Here, the first non-coating surface 1111 may be partitioned on an edge of the main first current collector 111, which is performed to easily attach or remove the auxiliary first electrode 15 to be attached to the first non-coating surface 1111. In particular, the first non-coating surface 1111 may be provided in a rectangular shape.

The first coating layer is applied with the same thickness on an entire surface of the main first current collector 111 including the first non-coating surface 1111. The cutting device cuts and removes the first coating layer applied on the first non-coating surface 1111 so that the first non-coating surface 1111 is exposed to the outside.

The main first electrode 11 is a positive electrode, and the first coating layer is a positive electrode coating layer.

### Process (b) of manufacturing second electrode

As illustrated in FIG. 11, in the process (b) of manufacturing the second electrode, a second current collector 121 is prepared. Next, a second coating layer 122 is applied on a surface of the second current collector 121. Then, the second electrode 12 may be manufactured.

Here, after applying the second coating layer 122 on the surface of the second current collector 121, a removal process of removing a portion of the surface of the second coating layer 122 corresponding to the first non-coating surface 1111 is further performed. That is, in the removal process, when the main separator 13 is disposed between the main first electrode 11 and the second electrode 12, a surface of the second coating layer 122 corresponding to a through-hole 131 of the main separator 13 is removed. In particular, in the removal process, only a portion of a total thickness of the second coating layer 122 is cut so that the second current collector 121 is not exposed to the outside.

The surface of the second coating layer 122 corresponding to the through-hole 131 may be removed by cutting or may be removed by repeatedly attaching and detaching a tape with adhesive force.

Thus, the second coating layer 122 includes a first coating surface 1221 and a second coating surface 1222, and the first coating surface 1221 has a thickness less than that of the second coating surface 1222. As a result, lithium precipitates may be induced to occur on the first coating surface 1221 during charging and discharging.

### Process (c) of manufacturing main separator

As illustrated in FIG. 12, in the process (c) of manufacturing the main separator, the main separator 13 is prepared. In addition, when the main separator 13 is disposed between the first main electrode 11 and the second electrode 12, a portion of a surface of the main separator 13 corresponding to the first non-coating surface 1111 is cut to form a through-hole 131. Then, the main separator 13 having the through-hole 131 may be manufactured.

### Process (d) of manufacturing auxiliary separator to be attached to main separator

As illustrated in FIG. 13, in the process (d) of manufacturing the auxiliary separator to be attached to the main separator, an auxiliary separator 14 is manufactured to block or open the through-hole 131 formed in the main separator 13. Here, the auxiliary separator 14 has an area greater than that of the through-hole. Next, the auxiliary separator 14 is attached to the main separator 13 while covering the through-hole 131. Here, the auxiliary separator 14 is detachably attached to the main separator 13. That is, when attaching the auxiliary separator 14 to the main separator 13, the through-hole 131 may be blocked, and when removing the auxiliary separator 14 from the main separator 13, the through-hole 131 may be opened.

Here, the auxiliary separator 14 includes a separation surface 141, which is detachably attached to the main separator 13 while covering the through-hole 131, and a handle surface 142 disposed outside the main separator 13 when the separation surface 141 is attached to the main separator 13 and configured to separate the auxiliary separator 14 from the main separator 13.

Here, the auxiliary separator 14 and the main separator 13 may be attached using heat fusion (heat and a pressure).

The adhesive force between the auxiliary separator 14 and the main separator 13 is less than that between the main first electrode 11 and the main separator 13.

The auxiliary separator 14 may be made of the same material as the main separator 13. However, in order to minimize an occurrence of a stepped portion, a thickness of the auxiliary separator 14 is less than that of the main separator 13.

In another embodiment, the auxiliary separator and the main separator may be made of different materials.

### Process (e) of manufacturing auxiliary first electrode to be attached to main first electrode.

As illustrated in FIG. 14, in the process (e) of manufacturing the auxiliary first electrode to be attached to the main first electrode, an auxiliary first electrode 15 to be connected or disconnected so that internal short circuit between the main first current collector 111 and the second electrode 12 occurs through the through-hole 131 of the main separator 13.

That is, the auxiliary first electrode 15 includes an auxiliary first current collector 151 having an attachment surface 1511 detachably attached to the first non-coating surface 1111, and an auxiliary first coating layer 152 applied on an outer surface of the attachment surface 1511. The attachment surface 1511 may have the same area as the first non-coating surface 1111.

In particular, the auxiliary first electrode 15 has the same polarity as the main first electrode 11. That is, each of the auxiliary first electrode 15 and the main first electrode 11 may be a positive electrode. Thus, the second electrode 12 may be a negative electrode.

The auxiliary first current collector 151 includes a second non-coating surface 1512 disposed outside the main first electrode 11 when the attachment surface 1511 is attached to the first non-coating surface 1111, and the second non-coating surface 1512 serves as a handle to separate the attachment surface 1511 of the auxiliary first current collector 151 from the first non-coating surface 1111.

The auxiliary first electrode 15 may have the same thickness as the main first coating layer 112. Thus, adhesion between the main first electrode 11 and the main separator may increase to prevent a stepped portion from occurring.

The adhesive force between the auxiliary first electrode 15 and the first non-coating surface 1111 is less than that between the main first electrode 11 and the main separator 13.

The auxiliary first electrode 15 may be attached to the first non-coating surface 1111 using an adhesive tape.

The processes (d) and (e) may be performed at the same time, or the process (e) may be performed before the process (d).

### Process (f) of manufacturing electrode assembly

As illustrated in FIG. 2, in process (f) of manufacturing the electrode assembly, the main separator 13 to which the auxiliary separator 14 is attached is disposed between the first electrode 11, to which the auxiliary first electrode 15 is attached, and the second electrode to manufacture the electrode assembly 10.

Here, the electrode assembly 10 may be in a state in which the handle surface 142 of the auxiliary separator 14 and the second non-coating surface 1512 of the auxiliary first electrode 15 are exposed to the outside, and the auxiliary separator 14 and the auxiliary first electrode 15 may be removed using the handle surface 142 and the second non-coating surface 1512.

### Process (g) of manufacturing secondary battery for internal short circuit test

As illustrated in FIG. 1, in the process (g) of manufacturing the secondary battery for the internal short-circuit test, the electrode lead 30 is coupled to the electrode tab of the electrode assembly 10, and then, the electrode assembly 10 and the electrolyte (not shown) are accommodated in the pouch 20. Here, a front end of the electrode lead 30 is drawn out of the pouch 20. Next, the pouch 20 is sealed to be airtight. Then, a finished secondary battery 1 for the internal short-circuit test may be manufactured.

Hereinafter, a test method using the secondary battery for the internal short-circuit test according to the first embodiment of the present invention will be described.

### [Test method of secondary battery for internal short-circuit test according to first embodiment of the present invention]

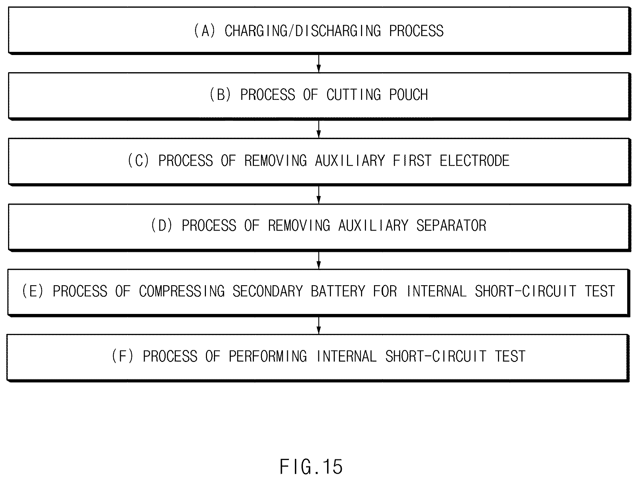

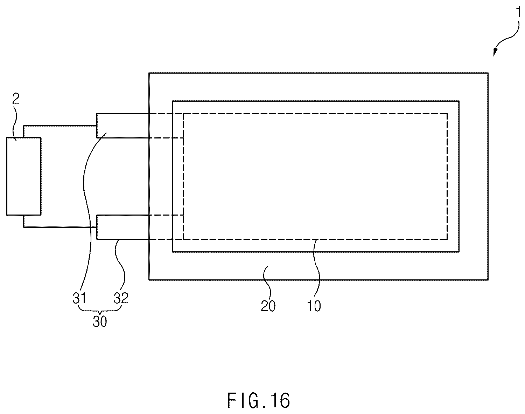

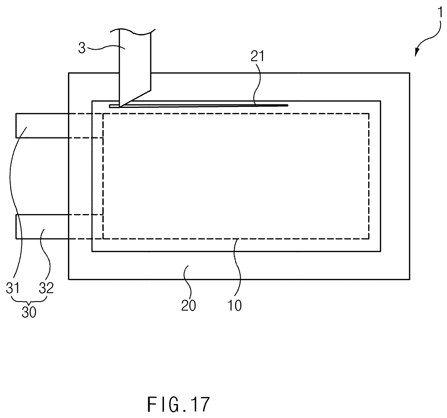

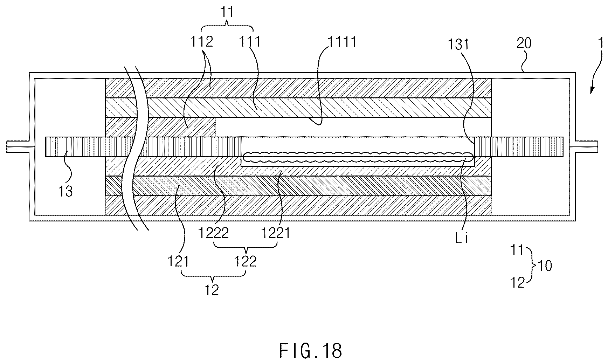

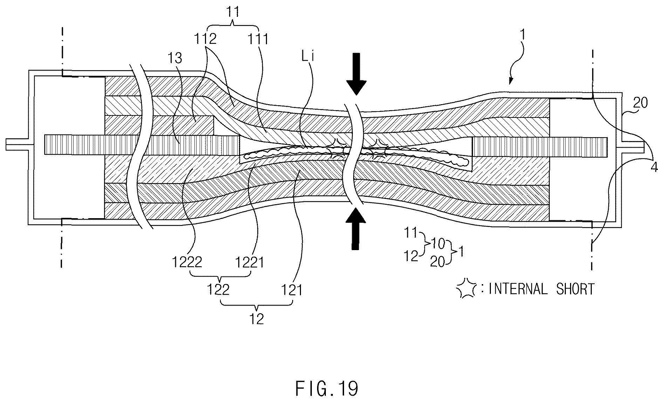

FIG. 15 is a flowchart illustrating a method for testing a secondary battery for an internal short-circuit test according to the first embodiment of the present invention, FIG. 16 is a plan view illustrating a charging/discharging process, FIG. 17 is a plan view illustrating a pouch cutting process, FIG. 18 is a cross-sectional view illustrating a process of removing the auxiliary separator and the auxiliary first electrode, and FIG. 19 is a cross-sectional view illustrating a process of compressing a secondary battery for an internal short-circuit test.

As illustrated in FIG. 15, the test method of the secondary battery for the internal short-circuit test according to the first embodiment of the present invention includes a process (A) of performing charging and discharging, a process (B) of cutting a pouch, a process (C) of removing an auxiliary first electrode, a process (D) of removing a protective separator, a process (E) of compressing the secondary battery for the internal short circuit test, and a process (F) of performing the internal short-circuit test.

### Process (A) of performing charging/discharging

As illustrated in FIG. 16, in the process (A) of performing the charging/discharging, a charging/discharging device 2 is connected to the electrode lead 30 of the secondary battery 1 for the internal short-circuit test, and then, power is applied to the secondary battery 1 for the internal short-circuit test to repeatedly perform the charging or discharging.

Here, lithium precipitates are generated on the first coating surface 1221 provided on the second coating layer 122 of the second electrode 12.

### Process (B) of cutting pouch

As illustrated in FIG. 17, in the process (B) of cutting the pouch, when the charging and discharging of the secondary battery 1 for the internal short circuit test is completed, the pouch 20 of the secondary battery 1 for the internal short circuit test is cut using the cutting device 3. Here, a surface of the pouch 20 adjacent to the second non-coating surface 1512 and the handle surface 142 of the auxiliary separator 14 is cut.

### Process (C) of removing auxiliary first electrode

As illustrated in FIG. 18, in the process (C) of removing the auxiliary first electrode, the auxiliary first electrode 15 attached to the main first electrode 11 of the electrode assembly 10 is removed through a cutoff part 21 of the pouch 20. Here, the auxiliary first electrode and the main first electrode may be attached to each other by an adhesive tape, and adhesive force of the adhesive tape may be weakened by the electrolyte, and thus, the auxiliary first electrode may be easily removed from the main first electrode.

That is, when the second non-coating surface 1512 of the auxiliary first electrode 15 exposed to the outside of the electrode assembly 10 is pulled, the attachment surface 1511 of the auxiliary first electrode 15, which is attached to the first non-coating surface 1111 of the main first electrode 11, may be separated to be removed.

### Process (D) of removing protective separator

As illustrated in FIG. 18, in the process (D) of removing the protective separator, the auxiliary separator 14 attached to the main separator 13 of the electrode assembly 10 is removed through the cutoff part 21 of the pouch 20. Here, the adhesion between the auxiliary separator and the main separator is weakened by impregnation with the electrolyte, and thus, the auxiliary separator may be easily removed from the main separator.

That is, when the handle surface 142 of the auxiliary separator 14 exposed to the outside of the electrode assembly 10 is pulled, the separation surface 141 of the auxiliary separator 14 attached to the main separator 13 may be easily separated to be removed. Then, the through-hole 131 of the main separator 13 is opened.

### Process (E) of compressing secondary battery for internal short circuit test

As illustrated in FIG. 19, in the process (E) of compressing the secondary battery for the internal short circuit test, the secondary battery 1 for the internal short circuit test is compressed using a compressing device 4 for 3 minutes to 1 hour, preferably 15 minutes to 30 minutes. Then, the first non-coating surface 1111 of the main first current collector 111, the lithium precipitates, and the first coated surface 1221 of the second electrode 12 are in contact with each other through the through-hole 131 of the main separator 13, and as a result, internal short circuit occurs therebetween.

That is, the internal short circuit may occur between the main first electrode 11, the lithium precipitates, and the second electrode 12.

### Process (F) of performing internal short circuit test

In the process (F) of performing the internal short circuit test, a voltage, resistance, and a temperature of the secondary battery 1 for the internal short-circuit test, in which the internal short circuit occurs, are measured using an internal short-circuit test device (not shown). That is, the voltage flowing through the electrode lead 30 of the secondary battery 1 for the internal short circuit test, in which the internal short circuit occurs, may be measured and recorded to test whether the internal short circuit occurs due to a pressure, a time, and a voltage difference.

In more detail, the behavior of the voltage and temperature appears in the following modes depending on an intensity of resistance during the internal short circuit.

First: mode in which the voltage drops slowly, and the temperature rises slightly and then decreases gently, and thus, the test is ended without ignition.

Second: mode in which the voltage drops, and the temperature rises rapidly, leading to the ignition.

Third: mode in which the voltage drop, and temperature rise rapidly, but an ignition critical point is not reached, and then, the temperature gradually decreases, which does not lead to the ignition.

Therefore, in the process (E) of compressing the secondary battery for the internal short-circuit test, the internal short circuit may be tested using the secondary battery for the internal short-circuit test 1.

Hereinafter, in descriptions of another embodiment of the present invention, constituents having the same function as the above-mentioned embodiment have been given the same reference numeral in the drawings, and thus duplicated description will be omitted.

### [Secondary battery for internal short-circuit test according to second embodiment of the present invention]

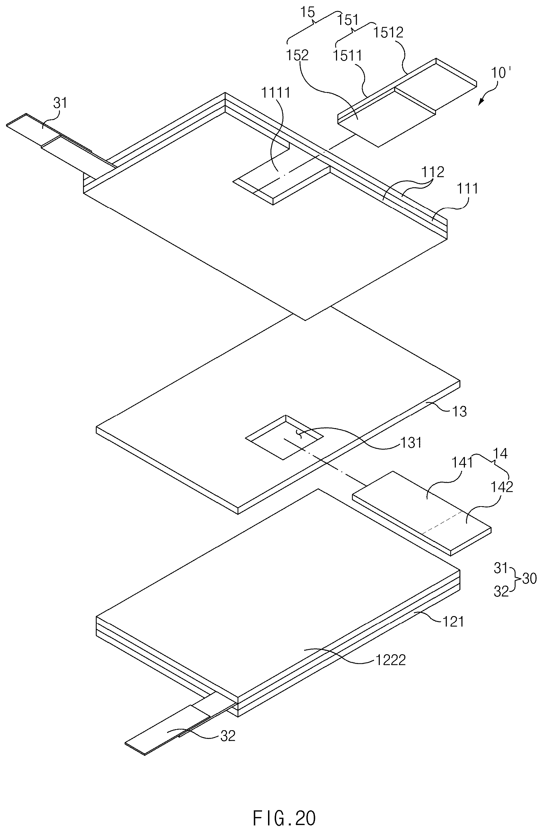

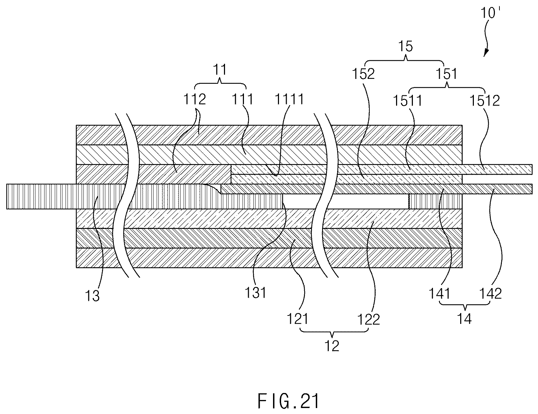

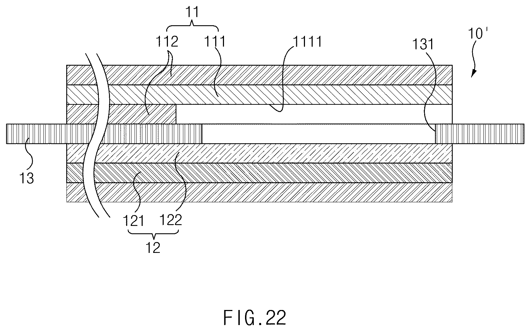

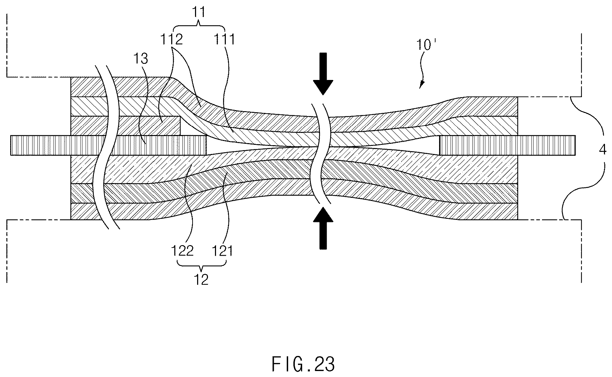

FIG. 20 is an exploded perspective view of an electrode assembly according to a second embodiment of the present invention, FIG. 21 is a cross-sectional view of the electrode assembly of FIG. 20, FIG. 22 is a cross-sectional view of an electrode assembly from which an auxiliary first electrode and an auxiliary separator are removed in FIG. 21, and FIG. 23 is a cross-sectional view of an electrode assembly that is in a compressed state in FIG. 22.

In describing a secondary battery for an internal short-circuit test according to a second embodiment of the present invention, the same reference numerals are used for the same components, and duplicated descriptions are omitted.

As illustrated in FIG. 20, the secondary battery for the internal short-circuit test according to the second embodiment of the present invention includes an electrode assembly 10', a pouch (not shown) accommodating the electrode assembly 10', and an electrode lead which is coupled to the electrode assembly 10 and of which a front end is drawn out of a pouch.

Here, the secondary battery for the internal short-circuit test according to the second embodiment of the present invention has the same configuration as the secondary battery for the internal short-circuit test according to the first embodiment of the present invention, except for a second electrode 12, and thus, their duplicated descriptions are omitted.

As illustrated in FIG. 21, the second electrode 12 includes a second current collector 121 and a second coating layer 122 applied on a surface of the second current collector 121. That is, referring to FIG. 21, the second coating layer 122 is applied on both surfaces of the second current collector 121. In addition, the second current collector 121 includes an electrode tab for connection to the electrode lead 30.

Here, unlike the second electrode 12 provided in the secondary battery for the internal short-circuit test according to the first embodiment, the second electrode 12 does not have a first coating surface 1221, and thus, the second electrode 12 does not generate lithium precipitates on a surface of the second coating layer 122 during charging/discharging.

As illustrated in FIG. 22, in the secondary battery for the internal short-circuit test according to the second embodiment of the present invention, when an auxiliary first electrode 15 and an auxiliary separator 14 are removed from the electrode assembly 10', a first non-coating surface 1111 of a main first electrode 11 and a second coating layer 122 of a second electrode 12 may be connected to face each other through a through-hole 131 of a main separator 13.

In addition, as illustrated in FIG. 23, in the secondary battery for the internal short-circuit test according to the second embodiment of the present invention, the first non-coating surface 1111 of the first electrode 11 and the second coating layer 122 of the second electrode 12 are in contact with each other through the through-hole 131 of the main separator 13 due to the compression to cause internal short circuit.

Thus, the secondary battery for the internal short-circuit test according to the second embodiment of the present invention may test the internal short circuit between the main first electrode 11 and the second electrode 12.

### [Experimental Example]

### Test preparation

The purpose of the test is to derive an influence of the lithium precipitates and a critical point of ignition when the internal short circuit (hazardous area, non-hazardous area) occurs due to the lithium precipitates.

In the test method, the secondary battery for the internal short-circuit test (positive electrode current collector-lithium precipitate-charged negative electrode) according to the first embodiment of the present invention (hereinafter referred to as Experiment 1) and the secondary battery for the internal short-circuit test according to the second embodiment of the present invention (positive electrode current collector-charged negative electrode (hereinafter, referred to as Experiment 2) are prepared. In addition, a unit pressure (MPa) of 0.3, 0.5, and 1.0 were applied to a unit area (mm²) of 1.76 (1.5Φ), 7.06 (3.0Φ), and 79.62 (5.0Φ) of Experiment 1 and Experiment 2.

### Test results of Experiment 1

As illustrated in Experimental Table 1 below, in Experiment 1, as the internal short circuit occurs due to the lithium precipitates, the critical point at which ignition occurs may not be confirmed due to high resistance of the lithium precipitates. That is, it is confirmed that no ignition occurred in Experiment 1.

**[Table 1]**

| Pressing force (MPa) | Short-circuit area (mm²) | Measured value before short circuit | | | Measured value after short circuit | | |
|---|---|---|---|---|---|---|---|
| | | Voltage (V) | Resistance (mΩ) | Temperatu re (°C) | Voltage (V) | Resistance (mΩ) | Temperature (°C) |
| 0.3 | 1.76(1.5 Φ) | - | - | - | - | - | - |
| | 7.06(3.0 Φ) | 4.180 | 6.38 | 24.5 | 2 | 0.8 | 27.4 |
| | 19.62(5.0 Φ) | 4.176 | 6.42 | 24.7 | 9 | 6.1 | 6.09 |
| 0.5 | 1.76(1.5 Φ) | - | - | - | - | - | - |
| | 7.06(3.0 Φ) | 4.180 | 6.50 | 24.4 | 3 | 2.6 | 18.3 |
| | 19.62(5.0 Φ) | 4.179 | 6.15 | 24.7 | 11 | 7.2 | 4.99 |
| 1.0 | 1.76(1.5 Φ) | 4.181 | 5.97 | 25.9 | 2 | 0.3 | 27.5 |
| | 7.06(3.0 Φ) | 4.170 | 6.39 | 20.5 | 37 | 26.2 | 1.48 |
| | 19.62(5.0 Φ) | 4.180 | 6.23 | 24.9 | 58 | 46.3 | 0.95 |

### <Experimental Table 1>

As shown in Table 2 below, in Experiment 2, when a pressure per unit area increases, the critical point at which the ignition occurs due to the internal short circuit may be confirmed. That is, it is confirmed that, in Experiment 2, when the pressure increases, the ignition occurs when the short circuit area increases.

**[Table 2]**

| Pressing force (MPa) | Short-circuit area (mm²) | Measured value before short circuit | | | Measured value after short circuit | | |
|---|---|---|---|---|---|---|---|
| | | Voltage (V) | Resistance (mΩ) | Temperature (°C) | Voltage (V) | Resistance (mΩ) | Temperature (°C) |
| 0.3 | 1.76(1.5 Φ) | 4.186 | 6.19 | 20.7 | - | - | Non-short circuit |
| | 7.06(3.0 Φ) | 4.170 | 6.46 | 20.7 | 75 | 26.3 | 0.73(non-ignition) |
| | 19.62(5.0 Φ) | 4.170 | 6.48 | 18.9 | 201 | 35.7 | 0.27(non-ignition) |
| 0.5 | 1.76(1.5 Φ) | 4.174 | 6.32 | 20.7 | - | - | Non-short circuit |
| | 7.06(3.0 Φ) | 4.169 | 6.29 | 21.3 | 4169 | 598 | Ignition |
| | 19.62(5.0 Φ) | 4.184 | 6.17 | 19.5 | 4184 | 541.7 | Ignition |
| 1.0 | 1.76(1.5 Φ) | 4.164 | 6.56 | 21.2 | 4164 | 571.5 | Ignition |
| | 7.06(3.0 Φ) | 4.184 | 6.74 | 20.8 | 84 | 23.9 | 0.62(non-ignition) |
| | 19.62(5.0 Φ) | 4.162 | 6.82 | 18.4 | 4162 | 582.7 | Ignition |

### <Experimental Table 2>

Thus, Experimental Table 3 as Table 3 below may be obtained with reference to Experimental Table 1 and Experimental Table 2, and as described above, the internal short circuit may be tested using the secondary battery for the internal short circuit test according to the first and second embodiments of the present invention.

**[Table 3]**

| Unit area (mm²) | Pressure (MPa) | Ignition or not (°C) | |
|---|---|---|---|
| | | Experiment 2 | Experiment 1 |
| 1.76(1.5Φ), | 1.00 | 571.5(Ignition) | 0.3 |
| 7.06(3.0Φ) | 0.30 | 26.3 | 0.8 |
| | 0.50 | 598.0(Ignition) | 2.6 |
| | 1.00 | 23.9 | 26.2 |
| 79.62(5.0Φ) | 0.30 | 35.7 | 6.1 |
| | 0.50 | 541.7(Ignition) | 7.2 |
| | 1.00 | 582.7(Ignition) | 46.3 |

### <Experimental Table 3>

The scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Secondary battery for internal short-circuit test
10: Electrode assembly
11: Main first electrode
111: Maine first current collector
1111: First non-coating surface
112: Main first coating layer
12: Second electrode
121: Second current collector
122: Second coating layer
1221: First coating surface
1222: Second coating surface
13: Main separator
131: Through-hole
14: Auxiliary separator
141: Separation surface
142: Handle surface
15: Auxiliary first electrode
151: Auxiliary first current collector
1511: Attachment surface
1512: Second non-coating surface
152: Auxiliary first coating layer
20: Pouch
21: Cutoff part
30: Electrode lead
31: First electrode tab
32: Second electrode tab
2: Charging/discharging device
3: Cutting device
4: Compressing device

## Claims

1. A secondary battery for an internal short-circuit test, comprising:
an electrode assembly; and
a pouch configured to accommodate the electrode assembly,
wherein the electrode assembly comprises:
a main first electrode constituted by a main first current collector and a main first coating layer applied to a remaining surface except for a first non-coating surface that is partitioned on the main first current collector;
a second electrode constituted by a second current collector and a second coating layer applied to a surface of the second current collector;
a main separator disposed between the main first electrode and the second electrode and having a through-hole at a position corresponding to the first non-coating surface;
an auxiliary separator detachably attached to the main separator to block or open the through-hole; and
an auxiliary first electrode detachably attached to the first non-coating surface and configured to connect the first non-coating surface of the main first current collector to the second electrode so that internal short circuit between the first non-coating surface and the second electrode occurs through the opened through-hole when being detached.

2. The secondary battery of claim 1, wherein the auxiliary first electrode comprises:
an auxiliary first current collector having an attachment surface detachably attached to the first non-coating surface; and
an auxiliary first coating layer applied on the attachment surface.

3. The secondary battery of claim 2, wherein the first non-coating surface is disposed on an edge of the main first current collector.

4. The secondary battery of claim 3, wherein the auxiliary first current collector further comprises a second non-coating surface disposed outside the main first electrode when the attachment surface is attached to the first non-coating surface and configured to separate the auxiliary first current collector from the first non-coating surface.

5. The secondary battery of claim 1, wherein the auxiliary separator comprises:
a separation surface detachably attached to the main separator while covering the through-hole; and
a handle surface disposed outside the main separator when the separation surface is attached to the main separator and configured to separate the auxiliary separator from the main separator.

6. The secondary battery of claim 1, wherein the auxiliary first electrode has the same thickness as the main first coating layer.

7. The secondary battery of claim 1, wherein the second coating layer comprises:
a first coating surface applied to a surface of the second current collector corresponding to the through-hole; and
a second coating surface applied to a surface of the second current collector on which the first coating surface is not applied,
wherein the first coating surface has a thickness less than that of the second coating surface.

8. The secondary battery of claim 2, wherein the main first electrode and the auxiliary first electrode have the same polarity.

9. The secondary battery of claim 8, wherein each of the main first electrode and the auxiliary first electrode is a positive electrode.

10. The secondary battery of claim 1, wherein the second electrode is a negative electrode.

11. The secondary battery of claim 1, wherein the auxiliary first electrode is detachably attached to the first non-coating surface through an adhesive tape.

12. The secondary battery of claim 1, wherein the auxiliary separator and the main separator are detachably attached to each other by thermal fusion.

13. A method for manufacturing a secondary battery for an internal short-circuit test, the method comprising:
a process (a) of preparing a main first current collector, on which a first non-coating surface is partitioned, to apply a main first coating layer on a surface of the main first current collector and remove the main first coating layer applied on the first non-coating surface, thereby manufacturing a main first electrode;
a process (b) of applying a second coating layer on a surface of the second current collector to manufacture a second electrode;
a process (c) of cutting a portion of a surface corresponding to the first non-coating surface when disposed between the main first electrode and the second electrode to manufacture a main separator having a through-hole;
a process (d) of manufacturing an auxiliary separator that blocks or open the through-hole to detachably attach the auxiliary separator to the main separator while covering the through-hole; and
a process (e) of manufacturing an auxiliary first electrode that connects or disconnects the main first current collector to or from the second electrode so that internal short circuit between the main first current collector and the second electrode occurs through the through-hole to detachably attach the auxiliary first electrode to the first non-coating surface.

14. The method of claim 13, wherein, in the process (a), the auxiliary first electrode is constituted by an auxiliary first current collector having an attachment surface detachably attached to the first non-coating surface and an auxiliary first coating layer applied on an outer surface of the attachment surface.

15. The method of claim 14, wherein, in the process (a), the first non-coating surface is partitioned on an edge of the main first current collector, and
in the process (e), the auxiliary first current collector comprises a second non-coating surface disposed outside the main first electrode when the attachment surface is attached to the first non-coating surface and configured to separate the auxiliary first current collector from the first non-coating surface.

16. The method of claim 13, wherein the process (b) further comprises a process of cutting a surface of the second coating layer corresponding to the through-hole when the main separator is disposed between the main first electrode and the second electrode after applying the second coating layer,
wherein the second coating layer comprises a cut first coating surface and a second coating surface that is not cut, wherein the first coating surface has a thickness less than that of the second coating surface.

17. The method of claim 13, further comprising, after the process (e),;
a process (f) of disposing the main separator, to which the auxiliary separator is attached, between the main first electrode, to which the auxiliary first electrode is attached, and the second electrode to manufacture an electrode assembly; and
a process (g) of accommodating the electrode assembly in a pouch to seal the pouch, thereby manufacturing a secondary battery for an internal short-circuit test.

18. The method of claim 13, wherein the main first electrode and the auxiliary first electrode have the same polarity.

19. A method for testing a secondary battery for an internal short-circuit test, the method comprising:
a process (A) of applying a voltage to the secondary battery for the internal short-circuit test provided as claimed as claim 1 to perform charging/discharging;
a process (B) of cutting a pouch of the secondary battery for the internal short-circuit test;
a process (C) of removing an auxiliary first electrode attached to a main first electrode of an electrode assembly through a cutoff part of the pouch;
a process (D) of removing an auxiliary separator attached to a main separator of the electrode assembly through a cutoff part of the pouch to open a through-hole of the main separator; and
a process (E) of compressing the secondary battery for the internal short-circuit test to cause internal short circuit by allowing a first non-coating surface of the main first current collector and a second electrode to be in contact with each other through the through-hole.

20. The method of claim 19, in the process (A), a second coating layer of the second electrode has a first coating surface and a second coating surface having a thickness greater than that of the first coating surface, wherein, during charging and discharging, lithium precipitates are generated on the first coating surface corresponding to the auxiliary first electrode.
